# EUROPEAN PATENT APPLICATION

(11) **EP 1 014 602 A2**
(43) Date of publication of application: **28.06.2000**
(21) Application number: 99440091.9
(22) Date of filing: 23.04.1999
(51) Int. Cl.: H04B 10/00

(54) **Method of re-routing the path between a node of a transoceanic MS-spring and a node of a further ring in case of simple or multiple failure, and transoceanic ring for implementing the method**

(30) Priority: 23.12.1998 IT MI982790
(71) Applicant: ALCATEL, 75008 Paris (FR)
(72) Inventor: De Girolamo, Claudio, 20094 Corsico (Milan) (IT)
(74) Representative: Colombo, Stefano Paolo

(57) **Abstract**

A method is described for re-routing the path extending from a transoceanic MS-SP ring to another ring in the case where a failure in such transoceanic ring or also a failure at the interconnection between the rings, occurs. The method according to the invention comprises the steps of providing, for each path, a primary interconnection node (E) which, in the absence of any failure, performs a drop-and-continue interconnection function; providing, for each path, a secondary interconnection node (F) which, in the absence of failures, performs a drop-and-insert interconnection function, a secondary circuit being provided between said primary and secondary interconnection nodes (E; F); and maintaining, in the presence of a failure, at least one of the drop-and-continue interconnection function of said primary interconnection node (E) and said drop-and-insert interconnection function of said secondary interconnection node (F).

## Description

The present invention relates to the field of the fiber optic transmission and in particular the field of fiber optic transoceanic MS-SP ring communication networks. Still more in particular, it is concerned with a method or re-routing the path from a transoceanic MS-SP ring to another ring in the case where a simple or multiple failure in such transoceanic ring, or also a failure at the interconnection between the rings, occurs.

In present telecommunication networks it has become extremely important to have the possibility of automatically overcoming the failures which could occur in the networks themselves by optimizing the installed traffic restoration. Such a need is of course much more felt in transoceanic rings wherein the path, i.e. the bi-directional interconnection between a node of the transoceanic ring and a node of another ring adjacent thereto, generally is very long, on the order of thousands of kilometers. In these types of rings, still because of the very long distances at stake, the time required for repairing the failure can be very long and therefore the occurrence of further failures during these long time intervals can not be excluded.

The configurations of the transoceanic rings having a single node interconnecting them to another ring (terrestrial or transoceanic), are in no way able to offset a double failure, e.g. along a fibre section in the ring and at an interconnection node.

The above problem has been faced and solved by means of double-node interconnection only in *ITU-T Recommendation G.842* with reference to conventional MS-SP rings (i.e. for terrestrial applications), which, in turn, are defined *at section 7.2 of ITU-T Recommendation G.841 2/98* but, on the contrary, it is not faced in its transoceanic application. The aforesaid *ITU-T Recommendation G.841* provides that when a "non-interconnection" failure occurs, i.e. a failure at an intermediate node (hence neither the source/destination node, nor the primary interconnection node and nor the secondary interconnection node) or a failure between two intermediate nodes, the traffic approaching the failure location through the "valuable" fibre (usually designed as "working" fibre) is re-routed to the incoming direction by using the protection fibre. This solution proves to be substantially simple and practical but it intrinsically results in a remarkable increase of transmission time, in view of the distance at stake which are anything but negligible, and the possibility of adding errors that could deteriorate the quality of the transmitted information is also increased.

Therefore, it is the object of the present invention to provide a valid method of re-routing the path from a transoceanic MS-SP ring to another ring, in the case where a simple or multiple failure in said transoceanic ring, or also a failure at the interconnection between the rings, occurs, thus maximizing the availability of the path itself.

This object, in addition to others, is obtained through a method having the characteristics set forth in the independent claim 1 and a transoceanic optical ring according to claim 6 which should be considered as an integral part of the present description; further advantageous characteristics of the method and of the ring in accordance with the present invention are set forth in the dependent claims which are to be considered as an integral part of the present description.

The basic idea consists in using the double-node interconnection mechanism of a conventional (terrestrial) MS-SP ring as defined by the aforesaid *ITU- Recommendation G.842* (both in the configuration with the secondary circuit on the working channel and in the one with the secondary circuit on the protection channel) and in improving the basic procedure to adapt it to transoceanic MS-SP rings by re-routing the bi-directional path in such a way that the double-node interconnection capabilities are maintained when a non-interconnection failure occurs.

The invention will result in being fully clear after having read the following detailed description, given by way of a mere non-limiting example, along with the various figures wherein:
- Fig. 1 diagrammatically illustrates a transoceanic MS-SP ring with secondary circuit on the working channel in which a non-interconnection failure has occurred;
- Fig. 2 diagrammatically illustrates a ring of the type shown in Fig. 1 in which an interconnection failure, in particular a failure of the primary node, has occurred;
- Fig. 3 diagrammatically illustrates a ring of the type shown in Fig. 1 in which an interconnection failure, in particular a secondary node failure, has occurred;
- Fig. 4 diagrammatically illustrates a ring of the type shown in Fig. 1 in which an interconnection failure, in particular a failure in the fibre between the primary and the secondary nodes, has occurred;
- Fig. 5 diagrammatically illustrates a transoceanic MS-SP ring with secondary circuit on the protection channel in which a non-interconnection failure has occurred;
- Fig. 6 diagrammatically illustrates a ring of the type shown in Fig. 5 in which an interconnection failure, in particular a failure of the primary node, has occurred;
- Fig. 7 diagrammatically shows a ring of the type shown in Fig. 5 in which an interconnection failure, in particular a failure of the secondary node, has occurred; and
- Fig. 8 diagrammatically illustrates a ring of the type shown in Fig. 5 in which an interconnection failure, in particular a failure in the fibre between the primary and the secondary nodes, has occurred.

Naturally, like reference numerals and letters in the figures designate the same or functionally equivalent parts.

In order to clear up the following detailed description, some definitions are given hereinafter.

First, "MS-SP ring" here obviously refers to an MS ring (which operates at a Multiplex Section level) provided with traffic protection means (Shared Protection). "Double-node interconnection" here refers to an architecture between two rings (only one, the transoceanic ring R, being illustrated) in which two nodes (E and F) are interconnected in each ring; such two nodes (E and F) are in particular a primary interconnection node E (performing the drop-and-continue interconnection function i.e. the node in which the traffic is dropped from the working channels of one ring and transmitted to the other ring) and a secondary interconnection node F (performing the drop-and-insert interconnection function i.e. it provides an alternate working route for a tributary). Each double-node interconnection transoceanic ring will obviously have a source/destination node A (the tributary used for inserting the path into the ring) and one or more intermediate nodes (B, C, D, H, G).

Now, "interconnection failure" here refers to a failure occurring a) at a primary (E) or secondary (F) interconnection node of a ring; or b) at two interconnection nodes (E or F) of different rings but which are mutually directly connected; or c) in the fibre (secondary circuit) connecting the two interconnection nodes (E and F) of the same ring. In contrast, a "non-interconnection failure", will be different from those indicated above, e.g. a failure that occurs at any intermediate node (B, C, D, H, G) or between two intermediate nodes, for instance C and D.

Lastly, "path" here refers to the bi-directional interconnection between a node of the transoceanic ring and a node of another ring connected thereto.

Throughout the various figures, the traffic path before the failure is represented by a continuous line and the one after the failure, by a dashed line. The working fiber is represented by arrows on a gray ground, the protection fibre by arrows on a white ground. Letter "i" stands for the input point (insertion tributary) of the traffic in the ring; letter "o" stands for the output point (drop tributary) of the traffic in the ring.

In consideration of the aforesaid, various types of failures will be taken into account in a transoceanic ring by describing in which manner the path changes and what actions the various nodes undertake. The case where the secondary circuit is performed on the working channel will be examined at first so as to turn to the case where the secondary circuit is realized on the protection channel.

### A) SECONDARY CIRCUIT ON THE WORKING CHANNEL

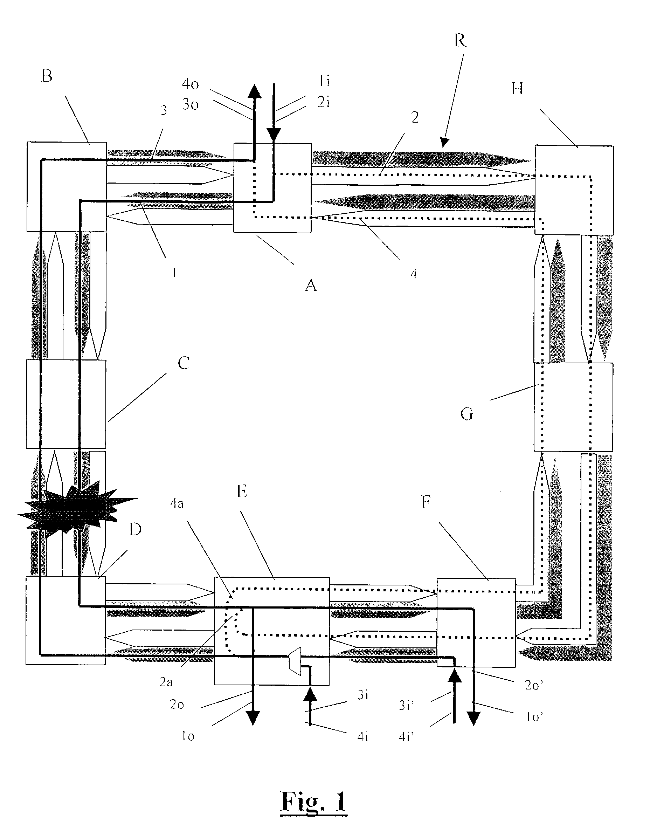

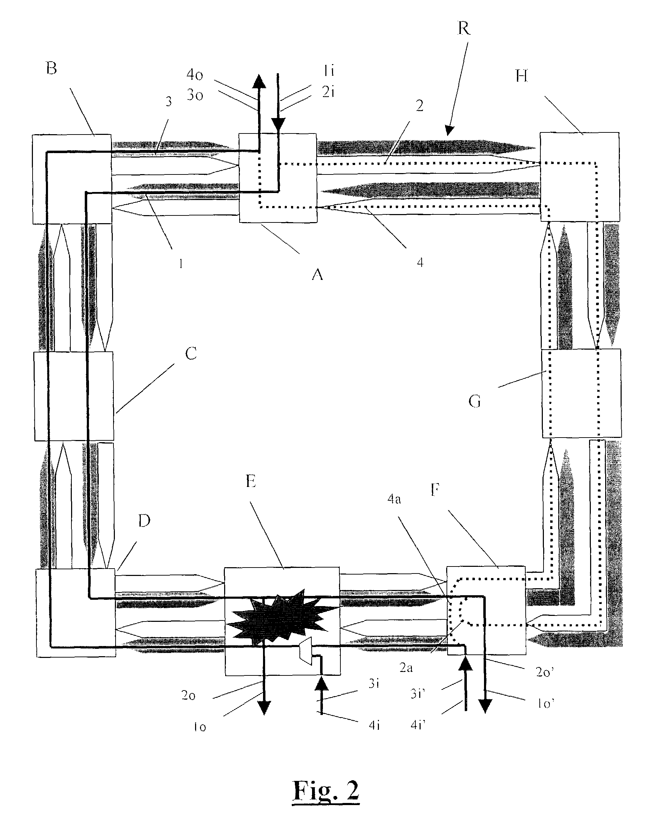

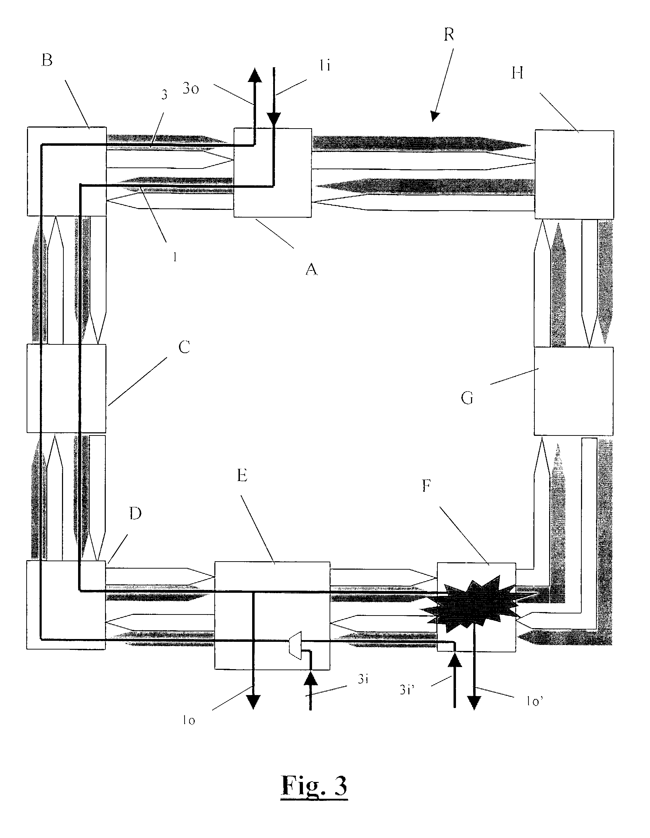

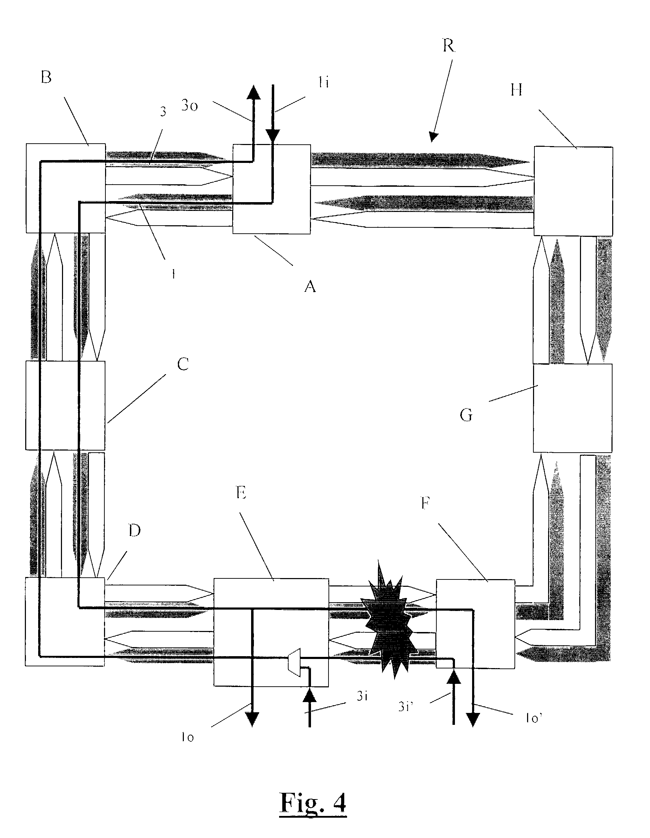

1) NON-INTERCONNECTION FAILURE (e.g. between nodes C and D, Fig. 1)
   The basic concept is that when a failure of this type occurs, the primary (E) and secondary (F) interconnection nodes maintain their primary and secondary role, respectively, and can be used to continue the path from/to the other ring on a regular basis. In this manner, a possible further interconnection mechanism failure would not result in traffic loss for that bi-directional path.
   1.1) Path direction: from source node A to a node of another ring (not shown) connected to the transoceanic ring R through nodes E and F.
      When a failure in the section from C to D of path 1 occurs, node A being informed of the failure bridges the transmitted signal also over the protection fibre in the other half of the ring, hence passing in the nodes H and G. The traffic, still using the protection fibre, will arrive at the secondary interconnection node F which will let it pass in transparent manner in order to reach the primary node E. The primary node E will bring the traffic again on the original path, thus outputting it at the drop tributary (2a): hence node E, besides acting as a selector, will be able to perform its drop-and-continue normal function (traffic is passed both to the tributary of the other ring and to the secondary node for redundancy purposes).
   1.2) Path direction: from a node of another ring (not shown) connected with the transoceanic ring R through nodes E and F, to the source node A.
      When a failure occurs between D and C in path 3, the primary node E, which receives the traffic both from the adjacent node of the other ring and from the secondary node F, being informed of the failure, will bridge (4a) traffic along the protection fibre (4) in the other half of the ring that will then pass again in the secondary node F in a transparent way and subsequently in the nodes G, H and A which node A will drop it toward the tributary to come out of the ring R (4o) as it would have done in the absence of the failure (3o).
      The advantages of the solutions described above at points 1.1 and 1.2 are evident. First, the path portion which is traveled twice is only from E to F and vice versa (these two nodes are rather close and therefore the possibility that the traffic experiences errors or interferences is low and the increase of the transmission times is negligible). Further, such a configuration permits of maintaining the traffic even when a further failure occurs in one of the interconnection tributaries, or of the interconnection nodes, of another ring (not shown).
2) FAILURE AT PRIMARY NODE "E" (INTERCONNECTION FAILURE) - Fig.2-
   In the case where a failure of this type occurs, the double-node interconnection characteristic would be unavoidably lost and therefore, should another failure occur at the secondary interconnection, the path would be unavoidably lost. However a failure of this type may well coexist with a failure of the type set forth at point 1 (Fig.1).
   2.1) Path direction: from source node A to a node of another ring (not shown) connected to the transoceanic ring R through nodes E and F.
      When a failure occurs at primary node E, both the source/destination node A and the secondary node F will at once be informed thereof. Node A will bridge (2i) the traffic along the path designated by 2 (right-hand half-ring) by utilizing the protection fibre; the traffic, arrived at node F will not prosecute toward node E but it will be switched (2a) and dropped toward the tributary to come out (20') of the ring R as it would have done in the absence of failure (1o)
   2.2) Path direction: from a node of another ring (not shown) connected with the transoceanic ring R through nodes E and F, to the source node A.
      When a failure occurs at the primary node E, both the source node A and the secondary node F will be informed thereof. The traffic entering (4i') the node F will be switched or re-routed (4a) in order to reach the destination node A by using the protection fibre (right-hand half-ring) and come out of node A on the drop tributary (40) as it would have done in the absence of failure (30).
3) FAILURE AT SECONDARY NODE "F" (INTERCONNECTION FAILURE) - Fig. 3 -
   In the case where a failure of this type occurs, the double-node characteristic would be unavoidably lost and therefore, should another failure occur at the primary interconnection, the path would be unavoidably lost.
   In practice, no node takes any action in the meaning that the path utilizes only the primary node for passing from/to the other ring (not shown).
4) FAILURE IN THE FIBRE OF THE TRANSOCEANIC RING R BETWEEN THE PRIMARY NODE AND THE SECONDARY ONE (INTERCONNECTION FAILURE - Fig. 4)
   With reference to Fig. 4, it will be recognized that a failure of this type corresponds as a matter of fact to a secondary node failure (see point 3 above).

### B) SECONDARY CIRCUIT ON THE PROTECTION CHANNEL

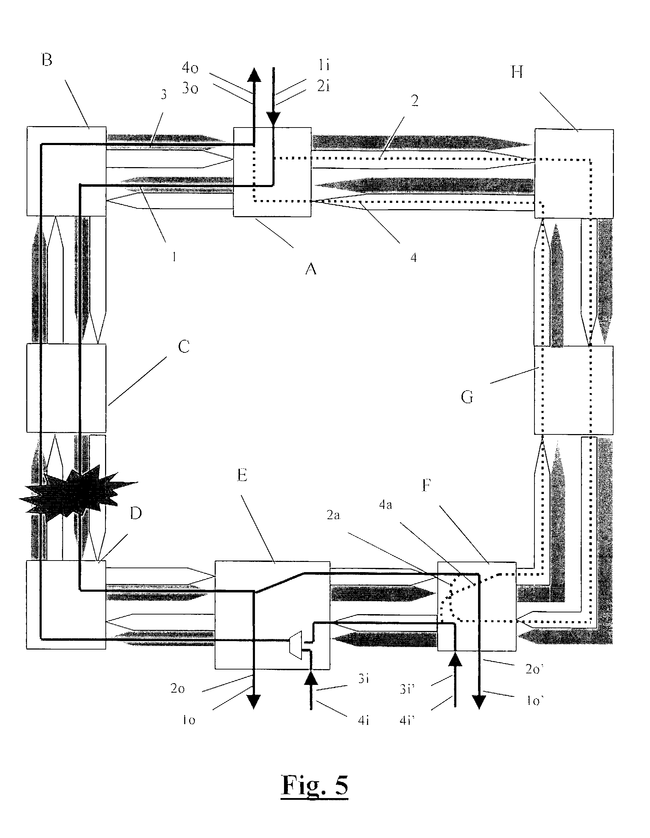

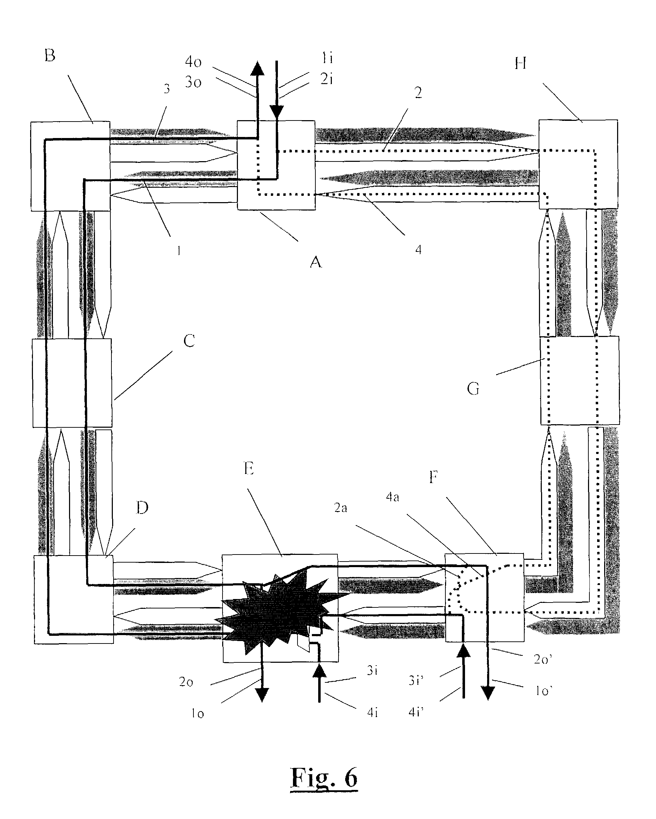

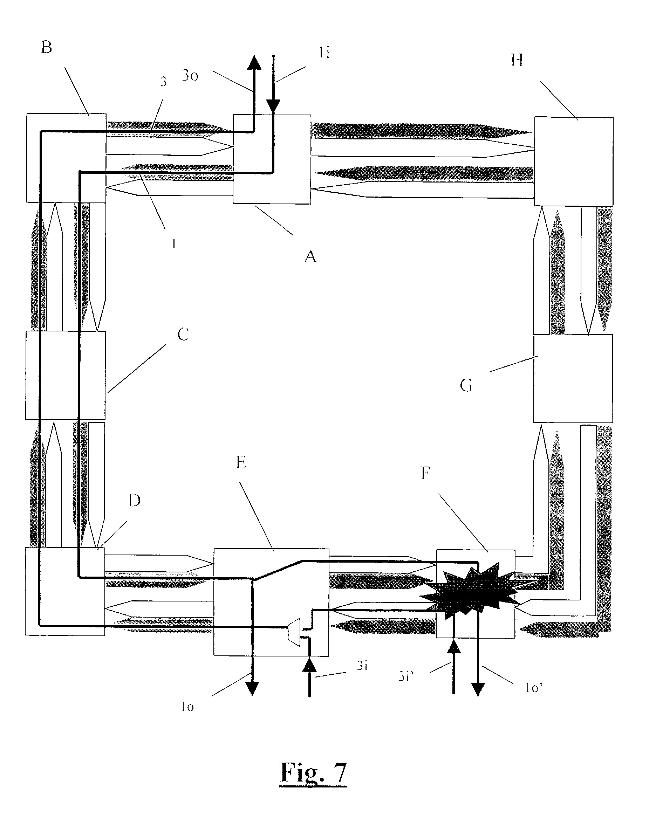

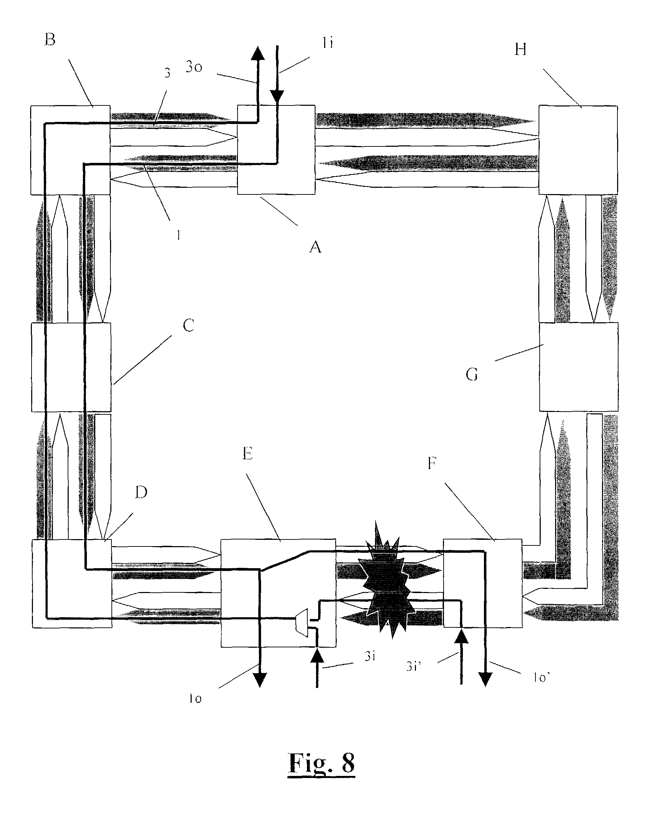

5) NON-INTERCONNECTION FAILURE (e.g. between nodes C and D, Fig. 5)
   It is impossible to use the protection capability between the primary node E and the secondary one F to send the path re-routed through the secondary node F, to the primary node E because the protection capability between the nodes E and F is used as a secondary circuit.
   Therefore, being impossible to maintain the double-node interconnection capability, only the secondary node is used for passing from/to the other ring (not shown). If another failure occurs at the secondary interconnection, the traffic is unavoidably lost.
   5.1) Path direction: from the source node A to a node of another ring (not shown) connected to the transoceanic ring R through nodes E and F.
      When a failure occurs in the fibre between two intermediate node (e.g. C and D), both the source node A and the secondary node F will at once be informed thereof. Node A will bridge (2i) the traffic along the path designated by 2 (right-hand half-ring) by using the protection fibre; the traffic, arrived at node F, will not prosecute towards node E but it will be switched (2a) and dropped toward the tributary to come out (20') of the ring R as it would have done in the absence of any failure (1o')
   5.2) Path direction: from a node of another ring (not shown) connected with the transoceanic ring R through nodes E and F to source node A.
      When a failure in the fibre between two intermediate nodes (D and C) occurs, both the source node A and the secondary node F will be informed thereof. The traffic entering (4i') the node F will be switched or re-routed (4a) in order to reach the destination node A by using the protection fibre (right-hand half-ring) and come out of node A at the output tributary (40) as it would have done in the absence of any failure (3o).
6) FAILURE AT PRIMARY NODE "E" (INTERCONNECTION FAILURE) -Fig. 6-
   For a failure of this type all considerations made at point 2) are substantially still valid.
7) FAILURE AT SECONDARY NODE "F" (INTERCONNECTION FAILURE) Fig.7
   For a failure of this type all considerations made at point 3 are still valid.
8) FAILURE IN THE FIBRE OF THE TRANSOCEANIC RING R BETWEEN THE PRIMARY NODE AND THE SECONDARY ONE (INTERCONNECTION FAILURE Fig.8)
   For a failure of this type all considerations made at point 4 are substantially still valid.
   The above description is to be intended as given by way of example since failures could occur at points different from those expressly illustrated; naturally the person skilled in the art will be able, on the basis of the above teachings, to understand how to re-configure the ring by actuating the node switching and bridging means. Multiple failures could also occur, e.g. starting from a failure as in Fig. 1, a failure could also occur in the primary node and/or in the secondary circuit (the fiber between the primary and the secondary nodes) without loosing the traffic and maximizing the path availability as a consequence.
   The optical ring according to the invention may naturally be a two-, four-, or more, fibre ring indifferently and for this reason whenever the "fibre" is mentioned both in the description and in the appended claims, it could be intended as "semi-fibre" (a more appropriate definition for 2-fibre rings) as well.
   It is obvious that several modifications, adaptations and replacements can be made to the implementations of the method described and illustrated in detail, all of them falling within the scope of the accompanying claims.

## Claims

1. Method of re-routing the path extending from a transmission transoceanic MS-SP ring to another ring in the case where a failure in such transoceanic ring, or also a failure at the interconnection between the rings, does occur, said transoceanic ring comprising working fibre or channel, protection fibre or channel and a source/destination node (A), the method being characterized by comprising the steps of:
i) providing, for each path, a primary interconnection node (E) that, in the absence of any failure, performs a drop-and-continue interconnection function;
ii) providing, for each path, a secondary interconnection node (F) that, in the absence of any failure, performs a drop-and-insert interconnection function, a secondary circuit being provided between said primary and secondary interconnection nodes (E, F); and
iii) maintaining, in presence of a failure, at least one of the drop-and-continue interconnection function of said primary interconnection node (E) and said drop-and-insert interconnection function of said secondary interconnection node (F).

2. Method according to claim 1, characterized in that said secondary circuit is made by the working channel or fibre.

3. Method according to claim 1, characterized in that said secondary circuit is made by the protection channel or fibre.

4. Method according to claim 1 or 2 wherein said failure is a non-interconnection failure, characterized by comprising the steps of:
i) re-routing (4a) over the protection fibre (4) the traffic entering (4i, 4i') the primary interconnection node (E) in such a way that it comes out of the ring (R) at the drop tributary (4o) of the destination node (A) as it would have done (30) in the absence of any failure; and/or
ii) bridging (2i) over the protection fibre (2) the traffic entering the ring (R) from the insertion tributary of the source node (A) and switching (2a) the traffic at the primary interconnection node (E) in such a way that it comes out (20, 20') of the ring (R) at the drop tributaries of the primary and secondary nodes (E, F) as it would have done (1o, 1o') in the absence of any failure.

5. Method according to claim 1, 2 or 3, characterized by comprising, in case of failure, the steps of: re-routing (4a) over the protection fibre (4) the traffic entering (4i') the insertion tributary of said secondary interconnection node (F) in such a way that it comes out (4o) of the ring (R) at the drop tributary of the destination node (A) as it would have done in the absence of any failure (3o); and/or bridging (2i) over the protection fibre (2) the traffic entering the ring (R) from the inserting tributary of the source node (A) and switching (2a) the traffic at the secondary interconnection node (F) in such a way that it comes out (20') of the ring (R) at the output tributary of the secondary node (F) as it would have done (1o') in the absence of any failure.

6. Transmission transoceanic optical MS-SP ring comprising working fibre or channel, protection fibre or channel, a source/destination node (A) provided with bridging/switching means for bridging, in case of failure, the traffic entering the ring from the insertion tributary on the protection fibre or channel and making the traffic from the protection or fibre channel get out of the ring (R) through the drop tributary, and interconnection means (E,F), characterized in that said interconnection means (E, F) comprise a primary interconnection node (E) which, in the absence of any failure, performs a drop-and-continue interconnection function, and a secondary interconnection node (F) which, in the absence of any failure, performs a drop-and-insert interconnection function, a secondary circuit being provided between such interconnection nodes, and in that means (2a, 4a) are provided for switching the traffic at said interconnection nodes (E, F) and designed to maintain, in case of a non-interconnection failure and/or at the primary node and/or at the secondary circuit, at least one of the drop-and-continue and drop-and-insert interconnection functions of said primary (E) and secondary (F) interconnection nodes, respectively.

7. Optical ring according to claim 6, characterized in that said switching means (2a, 4a), in the event of a non-interconnection failure, are designed to re-route (4a) over the protection fibre (4) the incoming traffic (4i, 4i) from the insertion tributary of the primary (E) and secondary (F) interconnection nodes in such a way that it comes out (4o) of the ring (R) at the drop tributary of the destination node (A) as it would have done (3o) in the absence of failure; and/or to switch (2a) the traffic, coming from the source node (A) along the protection fibre, at the primary interconnection node (E) in such a way that it comes out (2o, 2o') of the ring (R) at the drop tributary of the primary (E) and secondary (F) nodes as it have done (1o, 1o') in the absence of any failure.

8. Optical ring according to claim 6 or 7, characterized in that said switching means (2a, 4a), in case of failure at the primary node and/or at the secondary circuit, are able to re-route (4a) over the protection fibre (4) the incoming (4i') traffic from the insertion tributary of the secondary interconnection node (F) in such a way that it comes out (4o) of the ring (R) at the drop tributary of the destination node (A) as it would have done (3o) in the absence of failure; and/or to switch (2a) the traffic at the secondary interconnection node (F) in such a way that it comes out (2o') of the ring (R) at the drop tributary of the secondary node (F) as it would have done (1o, 1o') in the absence of any failure.
